# EUROPEAN PATENT APPLICATION

(11) **EP 2 763 487 A1**
(43) Date of publication of application: **06.08.2014**
(21) Application number: 13153398.6
(22) Date of filing: 31.01.2013
(51) Int. Cl.: H04W 72/12, H04W 24/10

(54) **Methods of performing radio resource management, network node, mobile device, base station, and wireless communication system using the same methods**

(30) Priority: 30.01.2013 US 201313753536
(71) Applicant: Acer Incorporated, New Taipei City 221 (TW)
(72) Inventor: Chou, Chie-Ming, 221 New Taipei City (TW); Huang, Ching-Yao, 221 New Taipei City (TW)
(74) Representative: Becker Kurig Straus

(57) **Abstract**

A method of performing radio resource management for a network node in a wireless communication system is disclosed. The method includes the following steps: performing sub access system (SAS) allocation to serve at least one mobile device, respectively; and adaptively adjusting the SAS allocation according to sensing results from the least one mobile device.

## Description

### Field of the Invention

The application relates to a method and a related communication device used in a wireless communication system, and more particularly, to a method of performing radio resource management for a network node and a related wireless communication system.

### Background of the Invention

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, an evolved universal terrestrial radio access network (E-UTRAN) includes a plurality of evolved Node-Bs (eNBs) and communicates with a plurality of mobile stations, also referred as user equipments (UEs). The UE of the LTE system can transmit and receive data on only one carrier component at any time.

A long term evolution-advanced (LTE-A) system, as its name implies, is an evolution of the LTE system, considering relaying for cost-effective throughput enhancement and coverage extension. For example, a relay can be deployed at the cell edge where the eNB is unable to provide required radio quality/throughput for the UEs or at certain location where radio signals of the eNB cannot cover. The LTE-A system can support a wider bandwidth up to 100 MHz to satisfy requirement for peak data rate. Coordinated multi-point (CoMP) transmission/reception is considered for the LTE-A as a tool to improve the coverage of high data rates, the cell-edge throughput and/or to increase system throughput. The main idea of the CoMP transmission/reception is as follows: when a UE is in the cell-edge region, it may be able to receive signals from multiple cell sites and the transmission of the UE may be received at multiple cell sites regardless of the system load. Given that, if the signaling transmitted from the multiple cell sites is coordinated, the DL (downlink) performance can be increased significantly. This coordination can be simple as in the techniques that focus on interference avoidance or more complex as in the case where the same data is transmitted from multiple cell sites. For the UL (uplink), since the signal can be received by multiple cell sites, if the scheduling is coordinated from the different cell sites, the system can take advantage of this multiple reception to significantly improve the link performance.

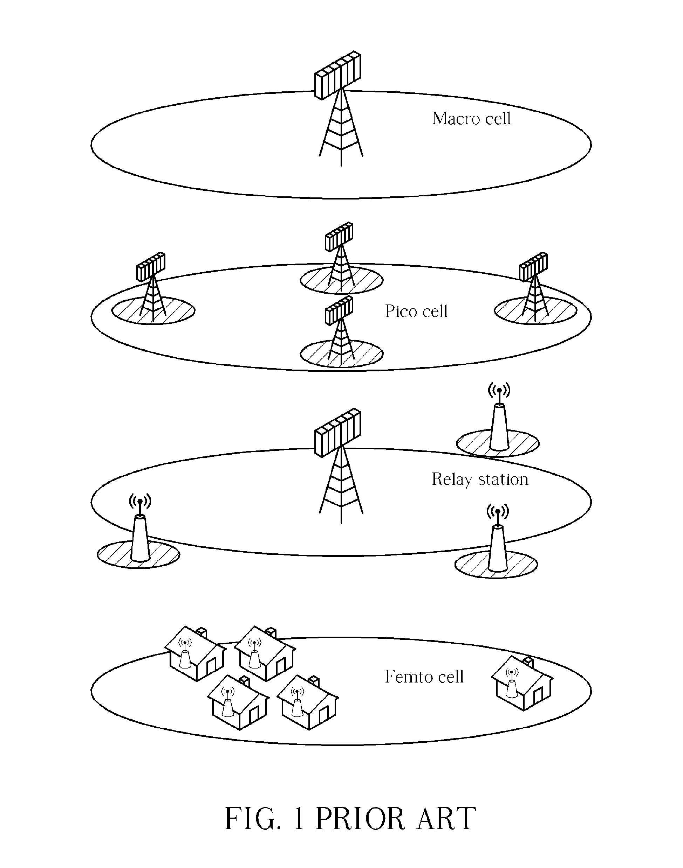

A heterogeneous network (HetNet) is a cellular network comprising different cell types to provide different access and enhance network performance. Please refer to FIG.1, which is a schematic diagram of a HetNet in the prior art. The HetNet often indicates the use of multiple types of access nodes in a wireless network. A Wide Area Network can use macrocells, picocells, and/or femtocells in order to offer wireless coverage in an environment with a wide variety of wireless coverage zones, ranging from an open outdoor environment to office buildings, homes, and underground areas. Mobile Experts defines the HetNet as a network with complex interoperation between macrocell, small cell, and in some cases WiFi network elements used together to provide a mosaic of coverage, with handoff capability between network elements.

When deploying HetNet, it would face the following issues: Inter-cell interference, Cell selection and mobility, Self-organization and optimization network (SON), and CoMP. However, those issues are separately handled and no overall optimization and a unified good solution is proposed.

### Summary of the Invention

This in mind, the present invention aims at providing a method and apparatus of performing radio resource management for a network node in a wireless communication system.

This is achieved by a method and apparatus of performing radio resource management for a network node in a wireless communication system in a wireless communications system according to claims 1, 2, 6, 7, 9, 10 and 11. The dependent claims pertain to corresponding further developments and improvements.

As will be seen more clearly from the detailed description following below, the claimed method of performing radio resource management for a network node in a wireless communication system comprising performing sub access system (SAS) allocation to serve at least one mobile device respectively and adaptively adjusting the SAS allocation according to sensing results from the least one mobile device.

### Brief Description of the Drawings

FIG.1 is a schematic diagram of a HetNet in the prior art.
FIG.2 is a schematic diagram of a wireless communications system according to an embodiment of the present disclosure.
FIG.3 is a schematic diagram of a communication device according to an embodiment of the present disclosure.
FIG.4 illustrates an exemplary protocol stack of the wireless communications system in FIG.2.
FIG.5 is a flow chart of an exemplary process.
FIG.6 is a schematic diagram of an exemplary SAS allocation.
FIG.7 is a flow chart of another exemplary process.
FIG.8 is a flow chart of still another exemplary process.

### Detailed Description

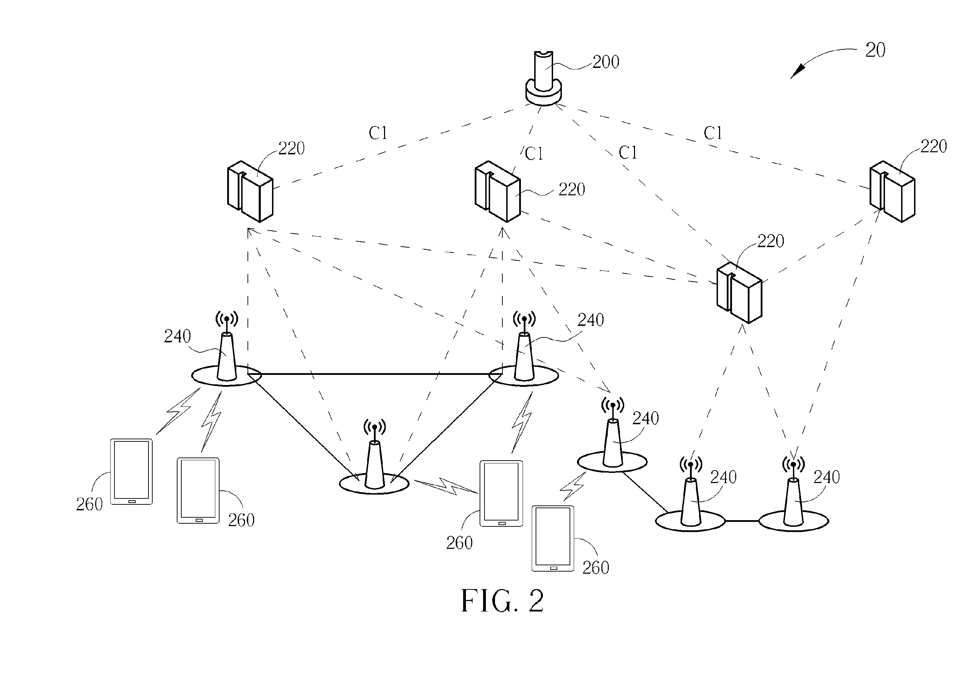

Please refer to FIG.2, which is a schematic diagram of a wireless communications system 20 according to an embodiment of the present disclosure. The wireless communications system 20, such as an LTE-A (long-term evolution-advanced) system or other mobile communications systems supporting multiple component carriers with which simultaneous data transmission and/or reception (e.g. CoMP transmission/reception) can be performed, is briefly composed of a cloud-based server 200, a plurality of network control nodes 220, a plurality of base stations 240 and a plurality of user equipments (UEs) 260. The deployment of the wireless communication 20 is featured by a heterogeneous network (HetNet), which includes different cell types (e.g. macrocells, picocells, and/or femtocells) and provides different access. The network control nodes 220 can be a mobility management entity (MME), a serving gateway (S-GW) and a Home eNodeB Gateway(HeNB GW). The network control nodes 220 are connected to the cloud-based server 200 via C1 interface. In the LTE-A system, the base stations 240 can be referred to as evolved Node-Bs (eNBs) or Home eNB (HeNB). If the base stations are eNBs, the base stations 240 are connected to the network control nodes 220 via S1 interface. If the base stations are HeNBs, the base stations 240 are connected to the network control nodes 220 via S5 interface. The base station 240 and base station 240 are connected via X2 interface. The UEs 260 can be devices such as mobile phones, computer systems, etc. Besides, the base stations 240 and the UE can be seen as a transmitter or receiver according to transmission direction, e.g., for uplink (UL), the UE is the transmitter and base stations 240 is the receiver, and for downlink (DL), the base stations 240 is the transmitter and the UE is the receiver. Please note that the cloud baser server 200 is a logical entity, which can be co-located with MME.

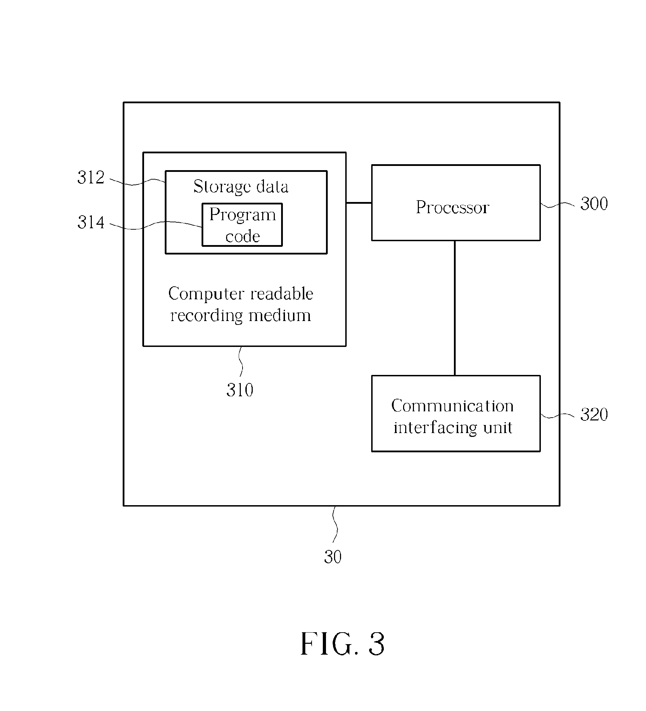

Please refer to FIG.3, which is a schematic diagram of a communication device 30 according to an embodiment of the present disclosure. The communication device 30 can be the cloud base server 300, network control nodes 320, and UEs 360 shown in FIG. 1 and includes a processor 300, a computer readable recording medium 310 and a communication interfacing unit 320. The computer readable recording medium 310 may be any data storage device that stores storage data 312, including program code 314, thereafter read and processed by the processor 300. Examples of the computer readable recording medium 310 include a subscriber identity module (SIM), read-only memory (ROM), random-access memory (RAM), CD (compact disk) -ROMs, magnetic tapes, hard disks, optical data storage devices, and carrier waves (such as data transmission through the Internet). The communication interfacing unit 320 is preferably a radio transceiver for wirelessly communicating with other communication devices and can transform process results from the processor 300 into radio signals.

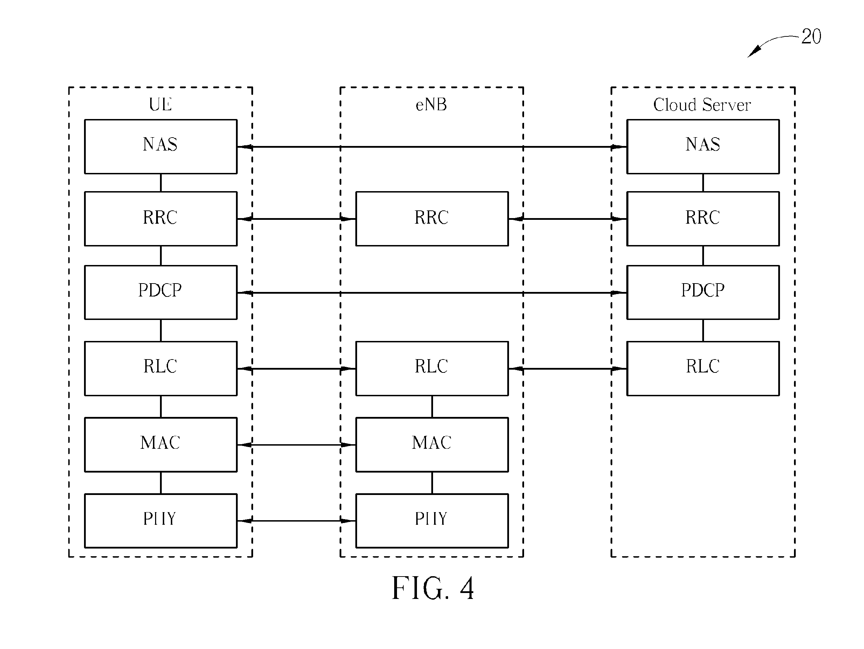

Please refer to FIG.4, which illustrates an exemplary protocol stack of the wireless communications system 20. The multiple communications protocol layers, from top to bottom, on the UE side are a non-access stratum (NAS) layer, a radio resource control (RRC) layer, a packet data convergence protocol (PDCP) layer, a radio link control (RLC) layer, a medium access control (MAC) layer and a physical (PHY) layer. The multiple communications protocol layers, from top to bottom, on the eNB side are a RRC layer, a RLC layer, a MAC layer and a PHY layer. The multiple communications protocol layers, from top to bottom, on the cloud-based server side are a NAS layer, a RRC layer, a PDCP layer, and a RLC layer. The NAS layer of the UE can communicate with the NAS layer of the cloud-based server. The PDCP layer of the cloud-based server deals with packet header compression and packet fragmentation and segmentation. Automatic Repeat-reQuest (ARQ) function is performed "end-by-end". The cloud-based server and the UE will check whether the transmission is successful or not and make another transmission if failure occurs. In that case, eNB just forwards the packet and does not maintain the associated process. User-plane would be handled according Control-plane' s decision. The cloud-based server manages data flow offloading and determines RRC decisions. The eNB forwards the results to the UE.

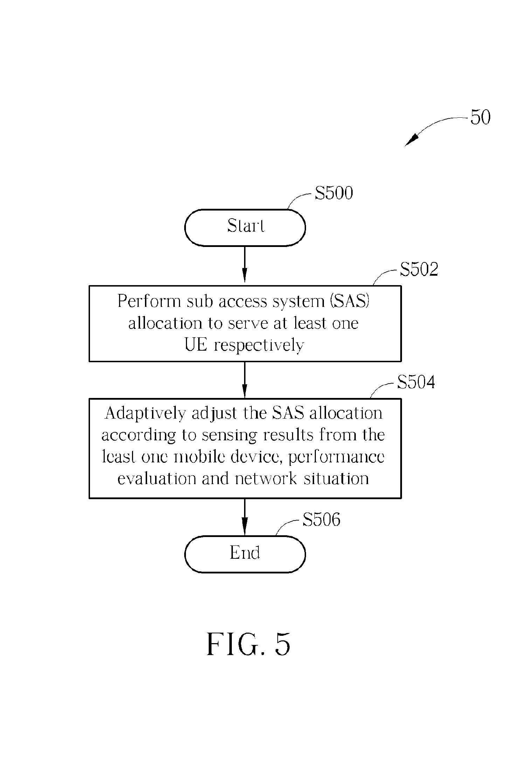

Please refer to FIG.5, which is a flow chart of an exemplary process 50. The process 50 is used for a cloud-based server for performing radio resource management. The cloud-based server can be the cloud-based server 200 in the wireless communication system 20. The process 50 can be complied into the program code 314 and includes the following steps:
- Step S500:: Start.
- Step S502:: Perform sub access system (SAS) allocation to serve at least one UE respectively.
- Step S504:: Adaptively adjust the SAS allocation according to sensing results from the least one mobile device, performance evaluation and network situation.
- Step S506:: End.

According to the process 50, the cloud-based server performs the SAS allocation to serve at least one UE respectively and adaptively adjust the SAS allocation according to sensing results from the least one mobile device, performance evaluation and network situation. All controls and schedules are taken in the cloud-based server. In this example, the better global optimization will be achieved and no truck effects will occur. In addition, the cloud-based server may perform optional functionalities, such as data fusion and feedback as well as global system performance evaluation.

To perform the data fusion and the feedback, the cloud-based server collects sensing results from the UEs and eNB information from the eNBs. The sensing results from the UEs include at least one of Received Signal Strength Indication (RSSI), Reference Signal Receiving Power (RSRP), Reference Signal Receiving Quality (RSRQ) and Channel Quality Indicator (CQI). The eNB information includes loading, backhaul capability, access capability, location, traffic volume and access statistics. When the cloud-based server performs the data fusion, the cloud-based server records the sensing results and the base station information to generate a recording result and evaluates the global system performance according to the recording result. Besides, the cloud-based server performs global system performance evaluation with all possible transmissions into account, such as UE metric and eNB metric. The UE metric includes transmission throughput, latency, jitter, outage probability, power consumption. The eNB metric includes system capacity, power consumption and CP (cost performance) value (transmitted bit/money). The cloud-based server can also perform reinforcement learning according to the aforementioned sensing results, the global system performance evaluation and a network situation to adaptively adjust the SAS allocation. This can prevent the UEs and the eNBs from the frequent feedback.

With all information from the UEs and the eNBs, the cloud-based server performs the SAS allocation to serve each UE respectively. The SAS allocation is constructed by at least one eNB performing a selected access behavior to serve a certain UE in selected resource blocks. In other words, the cloud-based server globally evaluates the overall system performance and performs the SAS allocation on each UE to optimize the system performance. The SAS allocation is adaptive according to UE's sensing results, performance evaluation and network situation. The operation of the SAS allocation is transparent to the UE so that the UE operates as usual in a cloud-based RRM (radio resource management) HetNet. The cloud-based server selects at least one eNB which performs the selected access behavior to serve the certain UE in the selected resource block. The UE may not be served by the eNB with the maximum power. Instead, the cloud-based server selects the eNBs for the UE according to the global system performance evaluation. All scheduling and resource arrangement are managed by the cloud-based server.

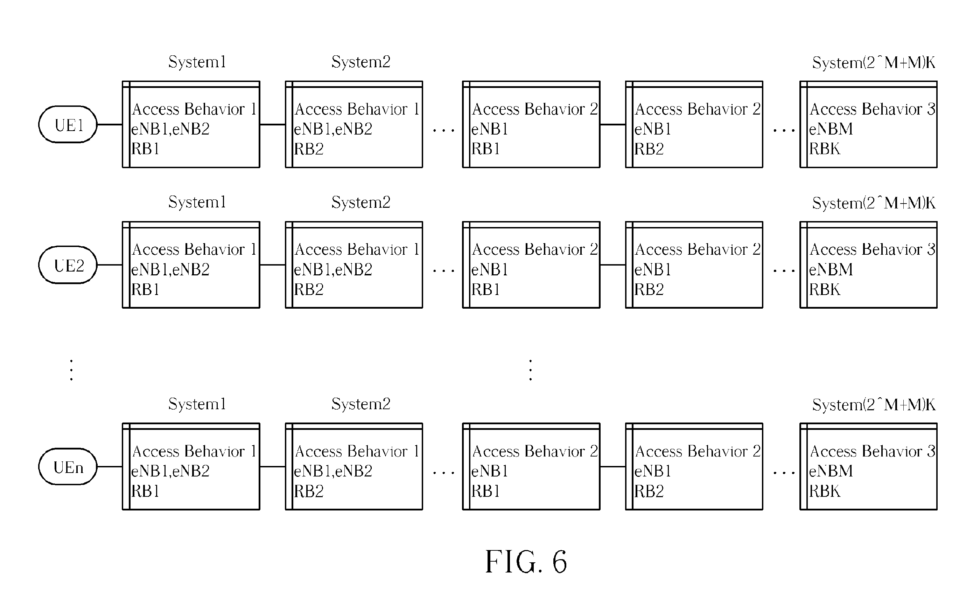

The selected access behavior includes single transmission, cooperative transmission, or cognitive transmission in CoMP technique. In the single transmission, one eNB makes transmission at a resource block for one UE. It is noted that different eNBs may perform a single transmissions on different UEs if their allocation was separated far away and have low inter-cell interference. In cooperative transmission, multiple eNBs make transmission at a resource block while the transmission content is identical. In cognitive transmission, multiple eNBs make transmission at a resource block for multiple UEs while the transmission content could be different and low priority transmission may be terminated if high priority transmission is used at the same time. When the cloud-based server allocates the SAS to one UE, the cloud-based server requests one or more eNBs to make single transmission, cooperative transmission or cognitive transmission. Each UE may have its candidate SAS. However, the cloud-based server needs to schedule the overall SAS allocation for all serving UEs. Please refer to FIG.6, which is a schematic diagram of an exemplary SAS allocation. Each UE can be allocated to one selected access behavior, one or more eNB and one selected resource block. Given M eNBs, K resource blocks, and 3 access behaviors, the combination of the SAS allocation for each UE is (2^M+M) K.

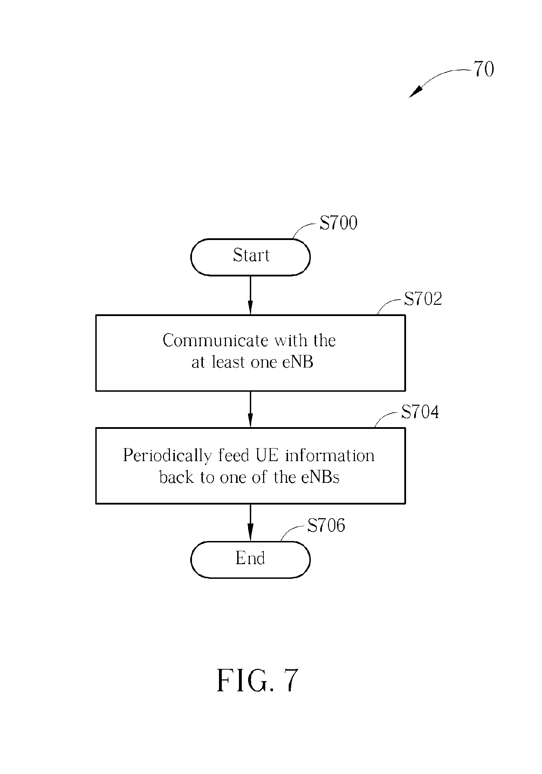

Please refer to FIG.7, which is a flow chart of an exemplary process 70. The process 70 is used for a UE for performing radio resource management. The UE can be the UE 260 in the wireless communication system 20. A cloud-based server allocates at least one eNB to the UE according to the SAS allocation. The process 70 can be complied into the program code 314 and includes the following steps:
- Step S700:: Start.
- Step S702:: Communicate with the at least one eNB.
- Step S704:: Periodically feed UE information back to one of the eNBs.
- Step S706:: End.

According to the process 70, the UE communicates with the at least one base station. The UE feeds the UE information back to one eNB periodically. Preferably, the UE information includes sensing results regarding each detectable base station, supported access capabilities, and/or required quality of services. The sensing results include at least one of RSSI, RSRP, RSRQ and CQI. The UE may receive a control signaling from a communicating base station to communicate with different types of base stations according to the radio resource management. Accordingly, a cloud-based server (e.g. the cloud-based server 200) can perform data fusion and the SAS allocation with the information feedback from the UE. Please note that the UE camps on a random eNB (i.e. doorkeeper) at the beginning. The doorkeeper eNB may not be involved eNBs in the SAS allocation and could be the eNB with the maximum power. Besides, the UE receives a control signal from a communication eNB to communicate with different types of eNBs according to the radio resource management.

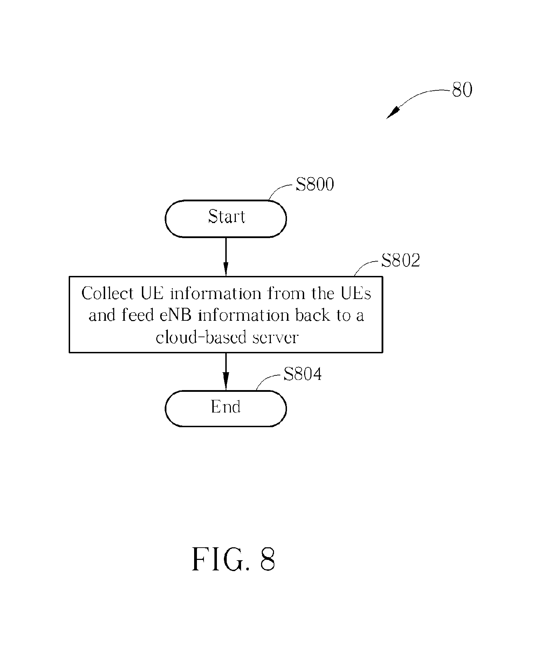

Please refer to FIG.8, which is a flow chart of an exemplary process 80. The process 80 is used for an eNB for performing radio resource management. The eNB can be the eNB 240 in the wireless communication system 20. A cloud-based server allocates the eNB to the UEs according to the SAS allocation. The process 80 can be complied into the program code 314 and includes the following steps:
- Step S800:: Start.
- Step S802:: Collect UE information from the UEs and feed eNB information back to a cloud-based server.
- Step S804:: End.

According to the process 80, the eNB collects UE information from the UEs and then feeds the eNB information back to the cloud-based server (e.g. the cloud-based server 200). The UE information includes sensing results regarding each detectable base stations, supported access capabilities, and required quality of service. The sensing results include at least one of RSSI, RSRP, RSRQ and CQI. The eNB information includes loading, interface capability, access capability, location, traffic volume and/or access statics. Accordingly, the cloud-based server can perform data fusion and the SAS allocation with the UE information and the eNB information.

Please note that the abovementioned steps including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 30 in which the processing means 200 processes the program code 314 related to the abovementioned processes and the processed results can perform radio resource management in the wireless communications system 20.

To sum up, the cloud-based server is introduced to achieve allover optimization for the wireless communication system and integrate different technologies (e.g. HetNet, IDC (integrated data center), CoMP). The cloud-based server is featured by push controls and schedules, data fusion and feedback, global system performance evaluation, SAS allocation. According to the aforementioned examples, the present invention can achieve heterogeneous diversity which means UE could be served by different types of eNBs according to its requirements, applications, energy-efficient network and universal mobility management. Different applications can be served by different eNBs with appropriate access characteristics. The cloud-based server may further efficiently control eNB's transmission power and reduce interference. The adaptive SAS allocation can co-work with handover procedure and cell selection.

## Claims

1. A method of performing radio resource management for a network node in a wireless communication system, **characterized by** the method comprising:
performing sub access system (SAS) allocation to serve at least one mobile device respectively; and
adaptively adjusting the SAS allocation according to sensing results from the least one mobile device.

2. A network node for performing radio resource management in a wireless communication system, the network node comprising:
a computer readable recording medium, for storing program code corresponding to a process; and
a processor, coupled to the computer readable recording medium for processing the program code to execute the process, **characterized by** the process comprising:
performing sub access system (SAS) allocation to serve at least one mobile device respectively; and
adaptively adjusting the SAS allocation according to sensing results from the at least one mobile device.

3. The method of claim 1 or the network node of claim 2, **characterized in that** the method or the process further comprises:
collecting sensing results from the at least one mobile device and base station information from at least one base station to perform data fusion, wherein the sensing results from the at least one mobile device comprises at least one of Received Signal Strength Indication (RSSI), Reference Signal Receiving Power (RSRP), Reference Signal Receiving Quality (RSRQ) and Channel Quality Indicator (CQI).

4. The method or the network node of claim 3, **characterized in that** the method or the process further comprises:
recording the sensing results and the base station information to generate a recording result, wherein the base station information from the at least one base station comprises at least one of access loading, capability, location and traffic volume; and
evaluating global system performance according to the recording result.

5. The method of claim 1 or the network node of claim 2, **characterized in that** performing SAS allocation comprises:
selecting at least one base station to perform a selected access behavior in selected resource block, wherein the selected access behavior comprises single transmission, cooperative transmission, or cognitive transmission.

6. A method of performing radio resource management for a mobile device in a wireless communication system, **characterized by** the method comprising:
communicating with at least one base station; and
feeding UE information back to one of the at least one base station, wherein the UE information comprises sensing results regarding each detectable base stations, supported access capabilities, and/or required quality of services.

7. A mobile device for performing radio resource management in a wireless communication system, the mobile device comprising:
a computer readable recording medium, for storing program code corresponding to a process; and
a processor, coupled to the computer readable recording medium for processing the program code to execute the process, **characterized by** the process comprising:
communicating with at least one base station; and
feeding back UE information to one of the at least one base station, wherein the UE information comprises sensing results regarding each detectable base stations, supported access capabilities, and/or required quality of services.

8. The method of claim 6 or the mobile device of claim 7, **characterized in that** the method or the process further comprises:
receiving a control signal from a communicating base station to communicate with different types of base stations according to the radio resource management.

9. A method of performing radio resource management for a base station in a wireless communication system, **characterized by** the method comprising:
collecting UE information and feeding base information back to a network node, wherein the base station information comprises at least one of access loading, capability, location and traffic volume, and the UE information comprises sensing results regarding each detectable base stations, supported access capabilities, and/or required quality of services.

10. A base station for performing radio resource management in a wireless communication system, the base station comprising:
a computer readable recording medium, for storing program code corresponding to a process; and
a processor, coupled to the computer readable recording medium for processing the program code to execute the process, **characterized by** the process comprising:
collecting UE information and feeding back base information to a network node, wherein the base station information comprises at least one of access loading, capability, location and traffic volume and the UE information comprises sensing results regarding each detectable base stations, supported access capabilities, and/or required quality of services.

11. A wireless communication system, **characterized by** comprising:
at least one base station, for collecting UE information and feeding back base information to a network node, wherein the base station information comprises at least one of access loading, capability, location and traffic volume;
at least one mobile device, for feeding back the UE information to one of the at least one base station, wherein the UE information comprises sensing results regarding each detectable base stations, supported access capabilities, and/or required quality of services; and
the network node, for performing sub access system (SAS) allocation to serve the at least one mobile devices respectively and adaptively adjusting the SAS allocation according to sensing results from the least one mobile device.

12. The wireless communication system of claim 11, **characterized in that** the network node further collects sensing results from the at least one mobile device and base station information from the at least one base station to perform data fusion, wherein the sensing results from the at least one mobile device comprises at least one of Received Signal Strength Indication (RSSI), Reference Signal Receiving Power (RSRP), Reference Signal Receiving Quality (RSRQ) and Channel Quality Indicator (CQI).

13. The wireless communication system of claim 11, **characterized in that** the network node is further used for recording the sensing results and the base station information to generate a recording result and evaluating global system performance according to the recording result.

14. The wireless communication system of claim 11, **characterized in that** performing SAS allocation comprises:
selecting the at least one base station to perform a selected access behavior in selected resource block, wherein the selected access behavior comprises single transmission, cooperative transmission, or cognitive transmission.

15. The wireless communication system of claim 11, **characterized in that** the at least one mobile station is further used for receiving a control signal from a communicating base station to communicate with different types of base stations according to the radio resource management.
